# EUROPÄISCHE PATENTSCHRIFT

(11) **EP 1 865 244 B1**
(45) Veröffentlichungstag und Bekanntmachung des Hinweises auf die Patenterteilung: **20.10.2010**
(21) Anmeldenummer: 06015775.7
(22) Anmeldetag: 28.07.2006
(51) Int. Cl.: F16L 21/00, F16L 37/14, F16L 3/18

(54) **Kupplung, insbesondere Rohrkupplung für Hochdruckrohre oder -schläuche**
Coupling, especially pipe coupling for high pressure pipes or tubes
Raccord, notamment raccord de tuyaux ou de conduites haute pression

(30) Priorität: 08.06.2006 DE 102006027015
(43) Veröffentlichungstag der Anmeldung: 12.12.2007
(73) Patentinhaber: Karl Hamacher GmbH, 44866 Bochum (DE)
(72) Erfinder:
(74) Vertreter: Nunnenkamp, Jörg

(56) Entgegenhaltungen:
- EP-A- 0 438 296
- WO-A-96/41093
- DE-A1-102004 008 983
- US-A- 1 073 850
- US-A- 2 893 669
- US-A- 4 186 946
- US-B1- 6 364 256

## Beschreibung

Die Erfindung betrifft eine Kupplung, insbesondere Rohrkupplung für Hochdruckrohre oder Hochdruckschläuche, bestehend aus zwei mit Enden der Hochdruckrohre oder Hochdruckschläuche verbindbaren Kupplungsstücken und einer die Kupplungsstücke mit Hilfe von wenigstens zwei Scherelementen koppelnden Muffe, wobei die Kupplungsstücke in nahezu durchmessergleicher Verlängerung der Enden die innen liegende Muffe übergreifen und wobei die Muffe mit jeweils Halbringnuten zur Aufnahme der Scherelemente ausgebildet ist und die Kupplungsstücke zu den Halbringnuten der Muffe korrespondierende Halbringnuten aufweisen.

Eine derartige Kupplung, von der im Oberbegriff des Anspruch 1 ausgegangen ist, wird in der US 1 073 850 A beschrieben. Dabei ist vorgesehen, dass über eine innenseitig zwischen zwei Schlauchenden angeordnete Muffe außenseitig eine Hülse angeordnet wird. Zur Dichtung der Muffe und der außenseitigen Hülse sind Schlauchschellen oder dergleichen vorgesehen. Dadurch hat die Kupplung außen hervorstehende Komponenten, die mitunter scharfkantig sein können. Insbesondere beim Transport von Schläuchen mit derartigen Kupplungen stellen die hervortretenden Komponenten ein erhebliches Hindernis dar oder können Schäden am Schlauch hervorrufen.

Der Schrift US 4 186 946 können mehrere Kupplungen für Schläuche und Rohre entnommen werden. Dabei sind stets Muffen oder Adapter vorgesehen, die entweder innen- oder außenseitig Absätze aufweisen oder bilden. Sind diese Absätze außenseitig angeordnet, stellen sie beim Transport oder beim Aufwickeln der Schläuche Hindernisse dar. Sind die Absätze innenseitig angeordnet, stellen sie im Moment der Druckbeaufschlagung durch ein Fluid eine Angriffsfläche dar, wodurch in axialer Richtung eine Kraft wirkt, die der Dichtung der Kupplung abträglich sein kann. Diese Kraft kann gewissermaßen ein Öffnen der Kupplung bewirken.

Der Schrift DE 10 2004 008 983 A1 kann eine Rohrverbindungsvorrichtung entnommen werden, bei der eine Muffe mit einem Konus über eine Hülse durch die Wirkung von Spannelementen derart gespreizt wird, dass Rohr und Muffe dichtend verbunden werden. Als Spannelemente können Muttern verwendet werden, die auf der Muffe verschraubbar angeordnet sind. Auch hier ergeben sich in gespanntem Zustand mehrere Absätze zwischen den Rohrendstücken, so dass der äußere Mantel der Rohrverbindung im Hinblick auf einen Transport nicht vollständig barrierefrei ist.

Eine Kupplung der eingangs beschriebenen Ausführungsform ist ferner durch das Gebrauchsmuster DE 73 41 019 U1 bekannt geworden. Hier geht es um ein Verbindungselement für eine schubgesicherte Rohrverbindung. Hochdruckrohre oder Hochdruckschläuche, also Rohre oder Schläuche für Druckbeaufschlagungen mit mehr als 50 bar, üblicherweise unter Berücksichtigung von Drücken bis mehrere 100 bar, werden nicht beschrieben.

Solche Hochdruckrohre und Hochdruckschläuche kommen vielfältig und beispielsweise unter Tage zum Einsatz, um dort vorgesehene Vortriebsmaschinen mit dem erforderlichen hydraulischen Druck zu versorgen. Hier stellt sich das Problem dar, dass solche Rohre respektive Schläuche dem fortschreitenden Schildausbau folgen müssen. Das setzt eine Führung und einen Transport der Hochdruckrohre bzw. Hochdruckschläuche voraus, um Beschädigungen zu vermeiden und einen durchgängig einwandfreien Betrieb der Vortriebsmaschinen zu gewährleisten.

In der Vergangenheit haben sich oftmals Probleme ergeben, weil die zugehörige Rohrkupplung über den Außendurchmesser der Rohrleitungen bzw. -schläuche übersteht und folglich beim Transport beschädigt werden kann und/oder kein einwandfreier Transport möglich ist. Beispiele solcher Rohrkupplungen, die sich ansonsten bewährt haben, sind Gegenstand der DE 100 07 369 A1. An dieser Stelle setzt die Erfindung ein.

Der Erfindung liegt das technische Problem zugrunde, eine Kupplung, insbesondere Rohrkupplung für Hochdruckrohre oder -schläuche, der eingangs beschriebenen Ausführungsform so weiter zu entwickeln, dass der Transport einer zugerhörigen Rohrleitung oder Schlauchleitung inklusive Kupplung einfacher als bisher und insbesondere beschädigungsfrei für die Kupplung gelingt.

Zur Lösung dieser technischen Problemstellung ist bei einer gattungsgemäßen Kupplung, insbesondere Rohrkupplung für Hochdruckrohre oder Hochdruckschläuche vorgesehen, dass sowohl die Kupplungsstücke aus auch die Muffe mit stimrandseitigen Schrägflächen in etwa gleicher Neigung ausgerüstet sind sowie nahezu ohne Übergang ineinander übergehen und hierdurch einen strömungsgünstigen Übergang vom jeweiligen Hochdruckrohr oder Hochdruckschlauch zur Kupplung sicherstellen.

Dabei ist die Muffe also nicht - wie bei der DE 100 07 369 A1 - so angeordnet, dass sie die beiden Kupplungsstücke übergreift, sondern findet sich vielmehr in der Kupplung und folglich im Innern einer zugehörigen Rohrleitung oder Schlauchleitung. Dagegen übergreifen die Kupplungsstücke die fragliche innen liegende Muffe, und zwar in nahezu durchmessergleicher Verlängerung der Enden, liegen also außenseitig der Kupplung. Das heißt, die Enden der Hochdruckrohre oder Hochdruckschläuche gehen nahezu durchmessergleich in die Kupplungsstücke über, welche die im Innern der Kupplung liegende Muffe übergreifen. Erfindungsgemäß ist die Muffe größtenteils zylindrisch mit jeweils den angesprochenen Halbringnuten ausgebildet. Auch die Kupplungsstücke verfügen erfindungsgemäß über zu den Halbringnuten der Muffe korrespondierende Halbringnuten. Die Halbringnuten der Muffe und diejenigen der Kupplungsstücke formen zusammengenommen eine Ringnut zur Aufnahme des jeweiligen Scherelementes. Sobald die Muffe in der von den Kupplungsstücken zusammengenommen gebildeten Aufnahme platziert ist, nehmen die Kupplungsstücke ihre dadurch vorgegebene Einbauposition ein. Um das jeweilige Scherelement einführen zu können, verfügen die Kupplungsstücke jeweils über Einführöffnungen, die mit ihren Halbringnuten verbunden sind.

Dadurch, dass die Kupplungsstücke im Bereich einer Verbindungsebene bzw. Stoßebene mit (geringfügigem) Axialabstand und sich gegenüber liegend angeordnet sind, gehen die zu verbindenden Hochdruckrohre bzw. Hochdruckschläuche oder allgemein Rohre oder Schläuche praktisch durchmessergleich auch im Bereich der Kupplung ineinander über. Es steht folglich eine Rohrleitung oder Schlauchleitung mit nahezu gleich bleibendem Außendurchmesser, auch im Bereich der Kupplung, zur Verfügung. Dadurch wird ein beschädigungsfreier und simpler Transport der Rohrleitung oder Schlauchleitung insbesondere in deren Axialrichtung ermöglicht.

Von besonderer Bedeutung ist ferner der Umstand, dass die Kupplungsstücke und die Muffe jeweils spiegelsymmetrisch im Vergleich zu der Stoßebene bzw. Verbindungsebene ausgebildet sind. Die Stoßebene definiert bekanntermaßen die Ebene, in welcher die Kupplungsstücke mit (geringfügigem) Axialabstand aneinander anstoßen. Durch die symmetrische Ausführung ist die Verbindung der Enden einzelner Rohre und Schläuche besonders einfach. Denn es muss nicht mehr- wie vielfach beim Stand der Technik- zwischen einem weiblichen oder männlichen Ende unterschieden werden, können vielmehr die Enden unmittelbar eine Kopplung erfahren. Hierzu muss lediglich die Muffe zwischen die Kupplungsstücke eingeführt werden und mit Hilfe der wenigstens zwei Scherelemente eine Festlegung gegenüber den Kupplungsstücken erfahren.

Um die Muffe einwandfrei im Innern der Kupplungsstücke zu führen und zu halten, weisen die Kupplungsstücke zusammengenommen eine Aufnahme für die darin axial und radial geführte Muffe auf. Sobald die Muffe zwischen die Kupplungsstücke eingeführt ist und die Kupplungsstücke gegeneinander verschoben werden, fungiert die Muffe in der Aufnahme zugleich als Anschlag und stellt die Position der Kupplungsstücke gegeneinander mit dem gewünschten Axialabstand im Bereich der Stoßebene sicher. Dadurch wird gleichzeitig gewährleistet, dass zugehörige Halbringnuten in einerseits der Muffe und andererseits dem jeweiligen Kupplungsstück zusammengenommen eine Ringnut zur Aufnahme des zugehörigen Scherelementes formen.

Bei den Scherelementen handelt es sich regelmäßig um auf einer Seele mit endseitiger Schlaufe aufgefädelte Zylinderkörper. Diese Zylinderkörper mögen aus Stahl gefertigt sein. Bei der Seele handelt es sich regelmäßig um ein Stahlseil. Auf diese Weise ist das Scherelement an die auftretenden Belastungen, insbesondere Zugbelastungen, angepasst. Das gilt auch für die Kupplungsstücke sowie die Muffe, welche ebenfalls aus Stahl gefertigt sind. Dabei hat es sich bewährt, die Kupplungsstücke als separate Bauteile auszubilden, die mit den (ebenfalls aus Stahl gefertigten) Enden der Rohre oder Schläuche verbunden, beispielsweise verschweißt, sind.

Jeweils außenrandseitig vorgesehene Dichtungen sorgen schließlich dafür, dass die Muffe gegenüber den Kupplungsstücken abgedichtet ist. Dadurch wird eine dichte Verbindung zwischen der innen liegenden Muffe und den jeweiligen außen liegenden Kupplungsstücken hergestellt, welche auch dann noch vorliegt, wenn sich die Kupplungsstücke infolge des im Innern befindlichen Druckes geringfügig in Axialrichtung bewegen sollten.

Weiterhin wird auch ein nicht zum Gegenstand der Erfindung zugehöriger Rohrhalter beschrieben, welcher sich zur Aufnahme der betreffenden Hochdruckrohre oder Hochdruckschläuche inklusive der beschriebenen erfindungsgemäßen Kupplung besonders eignet. Der fragliche Rohrhalter ist durch eine oder mehrere Führungsrollen gekennzeichnet, die eine V-förmige oder U-förmige Aufnahme bilden. Im Detail können hierzu die Führungsrollen selbst V-förmig oder U-förmig ausgebildet sein. Es ist alternativ oder zusätzlich auch denkbar, dass wenigstens zwei Führungsrollen (oder auch mehr Führungsrollen) V-förmig oder W-förmig gegeneinander angestellt sind. Dadurch wird ein besonders günstiger Rohrhalter zur Verfügung gestellt, welcher für die axiale Führung und den Transport einer Rohrleitung oder Schlauchleitung prädestiniert ist, die mit der erfindungsgemäßen Kupplung ausgerüstet ist. Hierin sind die wesentlichen Vorteile zu sehen.

Im Folgenden wird die Erfindung anhand einer lediglich ein Ausführungsbeispiel darstellenden Zeichnung näher erläutert; es zeigen:
- **Fig. 1**: die erfindungsgemäße Kupplung im Axialschnitt,
- **Fig. 2**: den Gegenstand nach Fig. 1 im Querschnitt und
- **Fig. 3a bis 3e**: verschiedene Ausgestaltungen des Rohrhalters.

In den Figuren ist eine Kupplung dargestellt, bei der es sich im Ausführungsbeispiel und nicht einschränkend um eine Rohrkupplung zur Verbindung von Hochdruckrohren 1 handelt. Selbstverständlich könnte die Kupplung respektive Rohrkupplung auch zur Kopplung von nicht dargestellten Schläuchen oder Hochdruckschläuchen eingesetzt werden. Dabei sind die Schläuche bzw. die Hochdruckrohre 1 und auch die Kupplung so ausgelegt, dass Medien im Innern transportiert werden können, die einen Druck weit über 50 bar aufweisen, insbesondere sogar mehrere 100 bar Druck besitzen. Bei den fraglichen Medien handelt es sich um Hydraulikmedien, die beispielsweise und nicht einschränkend zur Versorgung von Schildvortriebsmaschinen im untertägigen Abbaubetrieb Verwendung finden.

Die fragliche und nicht einschränkend rotationssymmetrisch sowie zylindrisch ausgebildete Kupplung setzt sich in ihrem grundsätzlichen Aufbau aus zwei Kupplungsstücken 2 zusammen, die an jeweils zu verbindenden Enden 3 der Hochdruckrohre 1 im Beispielfall vorgesehen sind. Tatsächlich sind die beiden Kupplungsstücke 2 aus Stahl (wie die Hochdruckrohre 1) gefertigt und an die Hochdruckrohre 1 jeweils endseitig angesetzt, im Ausführungsbeispiel mit den Hochdruckrohren 1 verbunden. Dazu ist jeweils eine umlaufende Schweißverbindung 4 vorgesehen, welche das jeweilige Hochdruckrohr 1 an seinem Ende 3 mit dem zugehörigen und als separates Bauteil ausgeführten Kupplungsstück 2 koppelt.

Im Rahmen der Erfindung können die beiden Kupplungsstücke 2 auch aus Kunststoff hergestellt sein. Das mag auch für die Hochdruckrohre 1 gelten, wobei dann die Schweißverbindung 4 als Kunststoffschweißverbindung ausgeführt ist.

Darüber hinaus erkennt man eine Muffe 5, welche mit Hilfe von zwei Scherelementen 6 die beiden Kupplungsstücke 2 und folglich die Hochdruckrohre 1 miteinander koppelt. Die Muffe 5 kann aus Stahl oder wiederum aus Kunststoff gefertigt werden. Vergleichbares gilt für die Scherelemente 6. Dabei können selbstverständlich auch mehr als zwei Scherelemente 6 realisiert werden. Die Scherelemente 6 dienen im Kern dazu, mit einer Druckbeaufschlagung der Hochdruckrohre 1 und folglich der Kupplung verbundene Bewegungen der Hochdruckrohre 1 in überwiegend Axialrichtung aufzunehmen, indem die Scherelemente 6 in zugehörigen Ringnuten 7 zunehmend verkeilt werden.

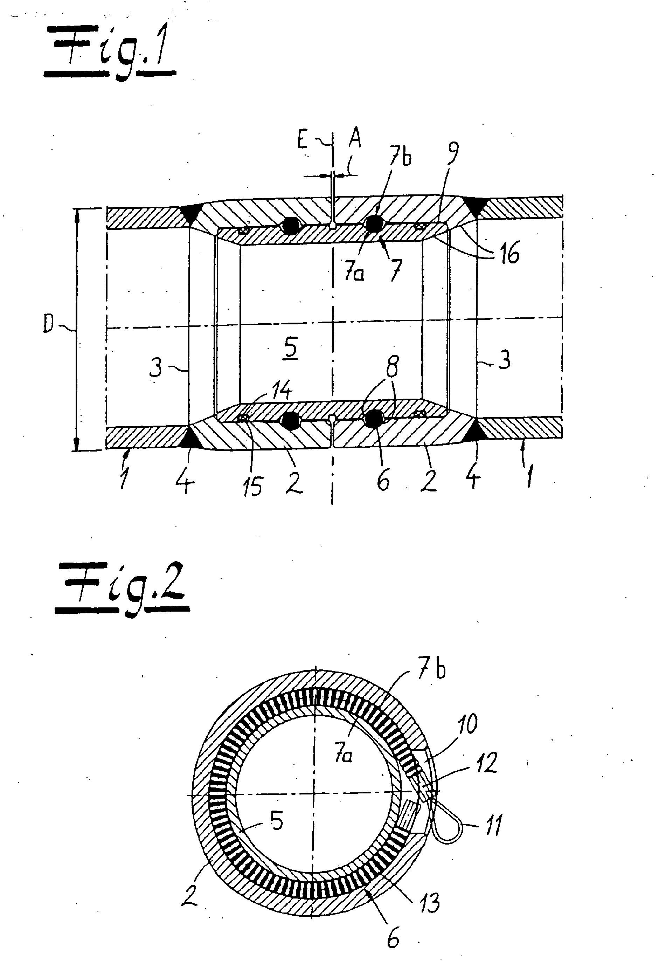

Tatsächlich setzen sich die Ringnuten 7 aus jeweils zwei Halbringnuten 7a, 7b zusammen. Dabei verfügt die zylindrisch ausgebildete Muffe 5 über die Halbringnuten 7a zur Aufnahme der Scherelemente, während die Kupplungsstücke 2 zu den vorerwähnten Halbringnuten 7a der Muffe 5 korrespondierende Halbringnuten 7b besitzen. Sobald die Muffe 5 ihre in der Fig. 1 gezeigte Einbauposition einnimmt, bilden die Halbringnuten 7a, 7b zusammengenommen jeweils die Ringnuten 7, in die dann die Scherelemente 6.eingeführt werden können, um die Muffe 5 mit den Kupplungsstücken 2 und folglich den Hochdruckrohren 1 zu verkeilen.

Man erkennt, dass die Ringnuten 7 bzw. Halbringnuten 7a, 7b mit gegenüber liegenden Schrägflächen 8 ausgerüstet sind, die die Verkeilung der Scherelemente 6 in den Ringnuten 7 unterstützen, sobald die Rohre bzw. Hochdruckrohre 1 axial (durch den im Innern ausgeübten Druck) auseinander gezogen werden. Je größer diese axiale Druckbeaufschlagung ist, umso stärker ist die Keilwirkung der Schrägflächen 8 in Verbindung mit den Scherelementen 6.

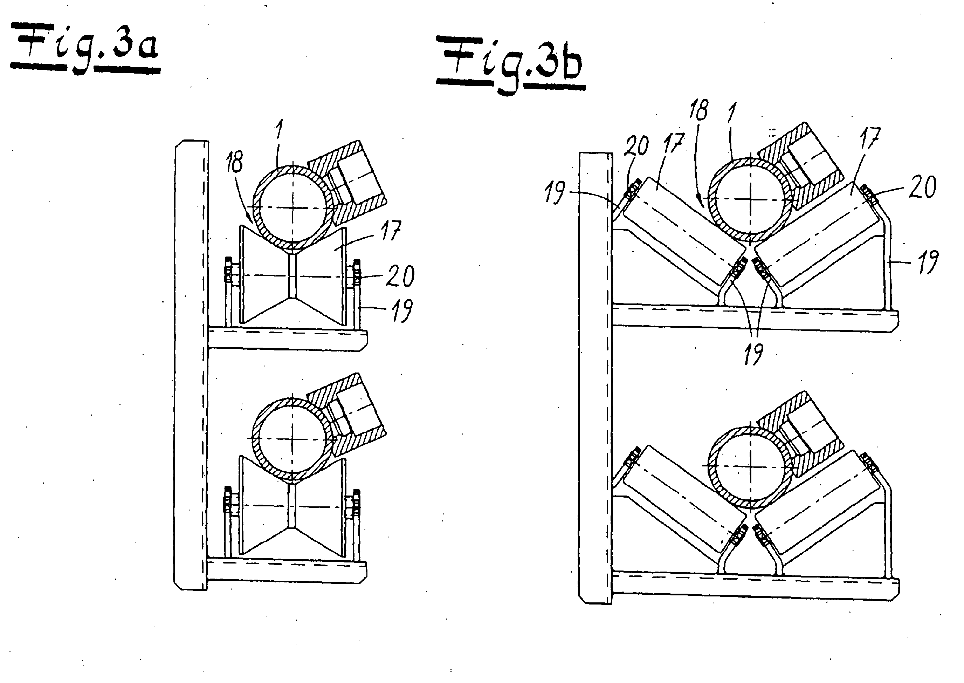

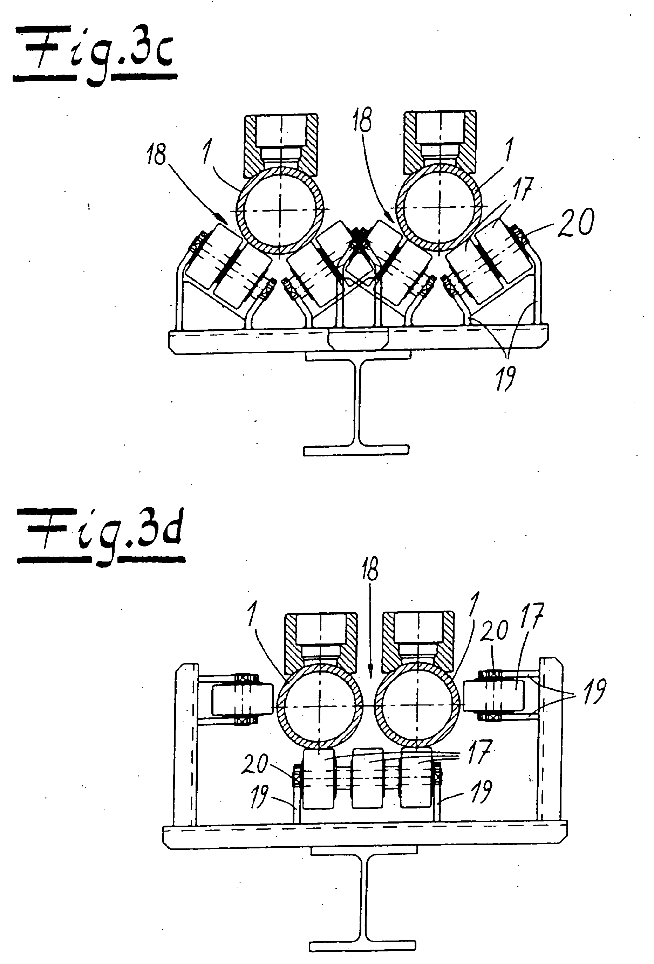

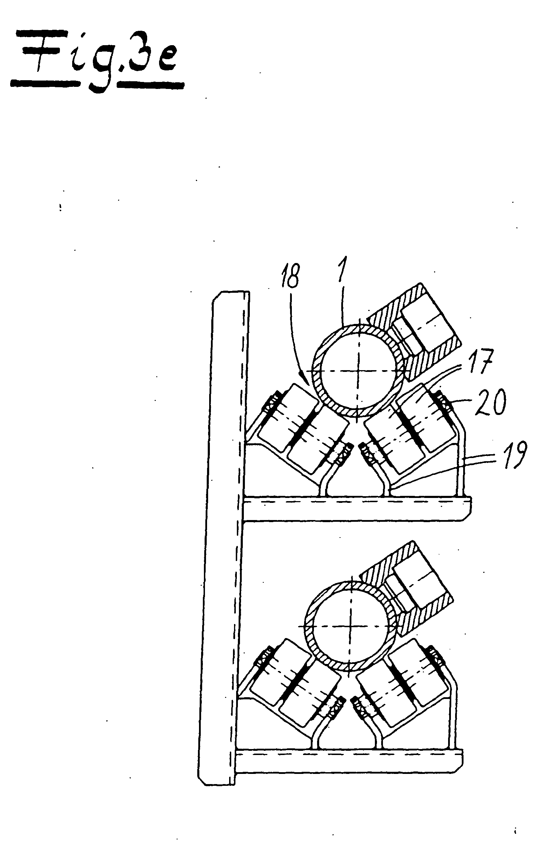

Von besonderer Bedeutung für die Erfindung ist der Umstand, dass die Kupplungsstücke 2 gleichsam durchmessergleich die Enden 3 der Rohre respektive Hochdruckrohre 1 verlängern. Das heißt, der von den Rohren bzw. Hochdruckrohren 1 vorgegebene Außendurchmesser D wird im Wesentlichen auch von der Kupplung eingehalten. Dadurch kann eine mit Hilfe der erfindungsgemäßen Kupplung zusammengesetzte Rohrleitung aus beispielsweise mehreren Hochdruckrohren 1 absatzfrei in Längsrichtung gezogen oder über eine Führungseinrichtung, beispielsweise einen in den Fig. 3a ff. dargestellten Rohrhalter bewegt werden.

Man erkennt, dass die Kupplungsstücke 2 in nahezu durchmessergleicher Verlängerung der Enden 3 der Rohre respektive Hochdruckrohre 1 die demgegenüber innen liegende Muffe 5 übergreifen. Dabei sind die Kupplungsstücke 2 und die Muffe 5 jeweils symmetrisch im Vergleich zu einer Verbindungsebene bzw. Stoßebene E ausgebildet. Die Stoßebene E kennzeichnet eine Ebene, gegenüber der sich die Kupplungsstücke 2 mit Axialabstand A symmetrisch gegenüber liegend angeordnet sind. Durch diese symmetrische Ausbildung von einerseits den Kupplungsstücken 2 und andererseits der Muffe 5 wird erreicht, dass beliebige Enden 3 der Rohre respektive Hochdruckrohre 1 in der beschriebenen Art und Weise miteinander gekoppelt werden können, ohne dass es auf männliche oder weibliche Enden ankommt. Tatsächlich sorgt die Muffe 5 dafür, dass die Kupplungsstücke 2 den beschriebenen Axialabstand A sich gegenüber liegend einhalten und im Übrigen die Halbringnuten 7a, 7b zusammengenommen die Ringnuten 7 zur Aufnahme der jeweiligen Scherelemente 6 formen.

Zu diesem Zweck bilden die Kupplungsstücke 2 zusammengenommen eine Aufnahme 9 für die darin axial und radial geführte Muffe 5. Diese Aufnahme 9 ist im Rahmen des Ausführungsbeispiels und nicht einschränkend im Querschnitt U-förmig ausgestaltet und an die zylindrische Muffe 5 angepasst. Sobald die Muffe 5 in die fragliche Aufnahme 9 eingelegt ist, können die Kupplungsstücke 2 axial gegeneinander so weit verschoben werden, bis sie den gewünschten Axialabstand A aufweisen. Gleichzeitig formen in dieser Position die Halbringnuten 7a, 7b zusammengenommen die gewünschten Ringnuten 7, in die die jeweiligen Scherelemente 6 eingeschoben werden.

Um das Einführen der Scherelemente 6 zu erleichtern, verfügen die Kupplungsstücke 2 über radiale Einführöffnungen 10, die jeweils mit der zugehörigen Halbringnut 7b des Kupplungsstückes 2 verbunden sind. Damit das Einführen und ggf. Herausziehen der Scherelemente 6 gelingt, besitzen diese eine endseitige Schlaufe 11 an einer dortigen Seele 12. Tatsächlich sind auf die fragliche Seele 12 des jeweiligen Scherelementes 6 einzelne Zylinderkörper 13 aufgefädelt. Die Seele 12 des Scherelementes 6 ist aus Stahlseilen gefertigt. Bei den Zylinderkörpern 13 handelt es sich um Röllchen aus Stahl. Auch die Muffe 5 und die Kupplungsstücke 2 sind aus Stahl gefertigt.

Randseitig der Muffe 5 finden sich - den jeweiligen Enden 3 zugewandt - in die Muffe 5 eingelassene umlaufende Ringnuten 14, die Dichtungen 15 aufnehmen. Auf diese Weise wird das Innere der Kupplung und dasjenige der Rohre 1 zuverlässig gegenüber den Ringnuten 7 und den an dieser Stelle vorgesehenen

Öffnungen 10 abgedichtet, und zwar auch dann, wenn sich beispielsweise die Kupplungsstücke 2 (geringfügig) gegeneinander unter Änderung ihres Axialabstandes A in Axialrichtung bewegen. Schließlich zeigt das Ausführungsbeispiel, dass sowohl die Kupplungsstücke 2 als auch die Muffe 5 mit stirnrandseitigen Schrägflächen 16 ausgerüstet sind, die einen strömungsgünstigen Übergang vom jeweiligen Rohr 1 zur Kupplung sicherstellen. Denn die zugehörigen Schrägflächen 16 verfügen in etwa über die gleiche Neigung und gehen nahezu ohne Übergang ineinander über.

Die Fig. 3a ff. zeigen schließlich verschiedene Ausführungsformen für einen Rohrhalter oder eine vergleichbare Führungseinrichtung, die einen geführten Axialtransport einer aus mehreren Rohren 1 mit Hilfe der Kupplung gebildeten Rohrleitung ermöglicht. Tatsächlich weist der fragliche Rohrhalter eine oder mehrere Führungsrollen 17 auf. Die Führungsrollen 17 formen jeweils eine U- oder V-förmige Aufnahme 18 für die fragliche Rohrleitung oder auch eine Schlauchleitung. Im Rahmen der Fig. 3a ist die Führungsrolle 17 selbst V-förmig ausgebildet. Dagegen kommen in den anderen Ausführungsbeispielen wenigstens zwei Führungsrollen 17 zum Einsatz, die V- oder U-förmig gegeneinander angestellt sind. Zu diesem Zweck verfügt der Rohrhalter über verschiedene Streben 19, die die einzelnen Führungsrollen 17 drehbar aufnehmen. Tatsächlich sind die Führungsrollen 17 in zugehörige Aufnahmen 20 der Streben 19 drehbar eingehängt.

## Patentansprüche

1. Kupplung, insbesondere Rohrkupplung für Hochdruckrohre (1) oder Hochdruckschläuche, bestehend aus zwei mit Enden (3) der Hochdruckrohre (1) oder Hochdruckschläuche verbindbaren Kupplungsstücken (2) und einer die Kupplungsstücke (2) mit Hilfe von wenigstens zwei Scherelementen (6) koppelnden Muffe (5), wobei
- die Kupplungsstücke (2) in nahezu durchmessergleicher Verlängerung der Enden (3) die innen liegende Muffe (5) übergreifen, und wobei
- die Muffe (5) mit jeweils Halbringnuten (7a) zur Aufnahme der Scherelemente (6) ausgebildet ist und die Kupplungsstücke (2) zu den Halbringnuten (7a) der Muffe (5) korrespondierende Halbringnuten (7b) aufweisen,
**dadurch gekennzeichnet,dass**
- sowohl die Kupplungsstücke (2) als auch die Muffe (5) mit stirnrandseitigen Schrägflächen (16) in etwa gleicher Neigung ausgerüstet sind sowie nahezu ohne Übergang ineinander übergehen und hierdurch einen strömungsgünstigen Übergang vom jeweiligen Hochdruckrohr (1) oder Hochdruckschlauch zur Kupplung sicherstellen.

2. Kupplung nach Anspruch 1, **dadurch gekennzeichnet, dass** die Kupplungsstücke (2) und die Muffe (5) jeweils symmetrisch im Vergleich zu einer Verbindungsebene (E) ausgebildet sind.

3. Kupplung nach Anspruch 1 oder 2, **dadurch gekennzeichnet, dass** die Kupplungsstücke (2) und/der die Muffe (5) aus Kunststoff und/oder Metall, insbesondere Stahl, hergestellt sind.

4. Kupplung nach einem der Ansprüche 1 bis 3, **dadurch gekennzeichnet, dass** die Kupplungsstücke (2) als separate und mit den Enden (3) verbundene, z. B. verschweißte, Bauteile ausgeführt sind.

5. Kupplung nach einem der Ansprüche 1 bis 4, **dadurch gekennzeichnet, dass** die Kupplungsstücke (2) zusammengenommen eine Aufnahme (9) für die darin axial und radial geführte Muffe (5) aufweisen.

6. Kupplung nach einem der Ansprüche 1 bis 5, **dadurch gekennzeichnet, dass** die Kupplungsstücke (2) im Bereich der Verbindungsebene (E) mit Axialabstand (A) sich gegenüber liegend angeordnet sind.

7. Kupplung nach einem der Ansprüche 1 bis 6, **dadurch gekennzeichnet, dass** die Kupplungsstücke (2) mit deren Halbringnuten (7b) verbundene Einführöffnungen (10) für jeweils ein Scherelement (6) aufweisen.

8. Kupplung nach einem der Ansprüche 1 bis 7, **dadurch gekennzeichnet, dass** das jeweilige Scherelement (6) auf einer Seele (12) mit endseitiger Schlaufe (11) aufgefädelte Zylinderkörper (13) besitzt.

## Claims

1. A coupling, more preferably a pipe coupling for high-pressure pipes (1) or high-pressure hoses consisting of two coupling pieces (2) that can be connected to ends (3) of the high-pressure pipes (1) or high-pressure hoses and a sleeve (5) coupling the coupling pieces (2) with the help of at least two shear elements (6), wherein
- the coupling pieces (2) in almost identical diameter extension of the ends (3) engage over the sleeve (5) located inside, and wherein
- the sleeve (5) is designed with half-ring grooves (7a)each for receiving the shear elements (6) and the coupling pieces (2) comprise half-ring grooves (7b) corresponding to the half-ring grooves (7a) of the sleeve (5),
**characterized in that**
- both the coupling pieces (2) as well as the sleeve (5) are equipped with sloping surfaces (16) of approximately the same inclination on the face edge side and merge with each other almost without transition and because of this ensure a favourable flow transition from the respective high-pressure pipe (1) or high-pressure hose to the coupling.

2. The coupling according to Claim 1, **characterized in that** the coupling pieces (2) and the sleeve (5) are each designed symmetrically compared with a connecting plane (E).

3. The coupling according to Claim 1 or 2, **characterized in that** the coupling pieces (2) and/the sleeve (5) are produced of plastic and/or metal, more preferably steel.

4. The coupling according to any one of the Claims 1 to 3, **characterized in that** the coupling pieces (2) are embodied as separate components connected to the ends (3), e.g. welded.

5. The coupling according to any one of the Claims 1 to 4, **characterized in that** the coupling pieces (2) together comprise a receptacle (9) for the sleeve (5) axially and radially guided therein.

6. The coupling according to any one of the Claims 1 to 5, **characterized in that** the coupling pieces (2) in the region of the connecting plane (E) are arranged located with axial spacing (A) opposite each other.

7. The coupling according to any one of the Claims 1 to 6, **characterized in that** the coupling pieces (2) comprise insertion apertures (10) connected with their half-ring grooves (7b) for a shear element (6) each.

8. The coupling according to any one of the Claims 1 to 7, **characterized in that** the respective shear element (6) has cylinder bodies (13) threaded on to a core (12) with end-sided loop (11).

## Revendications

1. Accouplement, en particulier accouplement de tuyau pour tuyaux à haute pression (1) ou flexibles à haute pression, comprenant deux bouts d'accouplement (2) pouvant être reliés à des extrémités (3) des tuyaux à haute pression (1) ou flexibles à haute pression et un manchon (5) accouplant les bouts d'accouplement (2) à l'aide d'au moins deux éléments de cisaillement (6),
- les bouts d'accouplement (2) recouvrant le manchon (5) situé à l'intérieur dans un prolongement pratiquement identique en diamètre des extrémités (3), et
- le manchon (5) étant conçu avec respectivement des rainures semi-annulaires (7a) pour le logement des éléments de cisaillement (6) et les bouts d'accouplement (2) présentent des rainures semi-annulaires (7a) correspondant aux rainures semi-annulaires (7b) du manchon (5),
**caractérisé en ce que**
- aussi bien les bouts d'accouplement (2) que le manchon (5) sont équipés de surfaces inclinées (16) côté bord avant dans une inclinaison à peu près identique et sont imbriqués les uns dans les autres pratiquement sans transition et garantissent de ce fait une transition favorable pour l'écoulement du tuyau à haute pression (1) ou du flexible à haute pression respectif à l'accouplement.

2. Accouplement selon la revendication 1, **caractérisé en ce que** les bouts d'accouplement (2) et le manchon (5) sont conçus respectivement symétriques par rapport à un plan de liaison (E).

3. Accouplement selon la revendication 1 ou 2, **caractérisé en ce que** les bouts d'accouplement (2) et/ou le manchon (5) sont fabriqués en matière synthétique et/ou en métal, en particulier en acier.

4. Accouplement selon l'une quelconque des revendications 1 à 3, **caractérisé en ce que** les bouts d'accouplement (2) sont réalisés sous forme de composants séparés et reliés, par exemple soudés, aux extrémités (3).

5. Accouplement selon l'une quelconque des revendications 1 à 4, **caractérisé en ce que** les bouts d'accouplement (2) présentent pris ensemble un logement (9) pour le manchon (5) guidé à l'intérieur axialement et radialement.

6. Accouplement selon l'une quelconque des revendications 1 à 5, **caractérisé en ce que** les bouts d'accouplement (2) sont disposés en se faisant face dans la zone du plan de liaison (E) avec une distance axiale (A).

7. Accouplement selon l'une quelconque des revendications 1 à 6, **caractérisé en ce que** les bouts d'accouplement (2) présentent des ouvertures d'introduction (10) reliées à leurs rainures semi-annulaires (7b) pour respectivement un élément de cisaillement (6).

8. Accouplement selon l'une quelconque des revendications 1 à 7, **caractérisé en ce que** l'élément de cisaillement (6) respectif présente des corps de cylindre (13) enfilés sur un noyau (12) avec une boucle (11) côté extrémité.
